Europäisches Patentamt

European Patent Office

Office européen des brevets

(11) Veröffentlichungsnummer: **0 036 956**
**B1**

(12) **EUROPÄISCHE PATENTSCHRIFT**

(45) Veröffentlichungstag der Patentschrift:
02.03.83

(21) Anmeldenummer: 81101486.9

(22) Anmeldetag: 02.03.81

(51) Int. Cl.³: **C 09 G 1/10**

(54) **Selbstglänzendes Schuh- und Lederpflegemittel.**

(30) Priorität: **12.03.80  AT 1367/80**

(43) Veröffentlichungstag der Anmeldung:
**07.10.81 Patentblatt 81/40**

(45) Bekanntmachung des Hinweises auf die Patenterteilung:
**02.03.83 Patentblatt 83/9**

(84) Benannte Vertragsstaaten:
**BE CH DE FR GB IT LI LU NL SE**

(56) Entgegenhaltungen:
**EP-A-0 017 119**
**DE-A-1 812 147**
**FR-A-1 084 641**
**GB-A-1 354 279**

(73) Patentinhaber: **Henkel Kommanditgesellschaft auf Aktien, Postfach 1100 Henkelstrasse 67, D-4000 Düsseldorf 1 (DE)**

(72) Erfinder: **Frieser, Erich P., Ortliebgasse 24/II/4, A-1170 Wien (AT)**
Erfinder: **Pfeiffer, Franz, Donaustadtstrasse 30/17/11, A-1220 Wien (AT)**

### Selbstglänzendes Schuh- und Lederpflegemittel

Selbstglanzemulsionen für Fußböden sind seit vielen Jahren im Haushalt und im Objektbereich im Einsatz. Es mangelt nicht an Versuchen, diese Produkte auch für andere Verwendungszwecke, z. B. zur Schuhbehandlung heranzuziehen.

Während es sich jedoch bei Fußbodenbelägen (Kunststoff, Holz oder Stein) um praktisch nicht verformbare, unelastische Materialien handelt, die auch beim Begehen kaum auf Verformungen beansprucht werden, stellt Leder ein verformbares, dehnfähiges, elastisches und biegefähiges Material dar, welches beim Tragen in Form des Schuhoberleders extrem auf diese lederspezifischen Eigenschaften beansprucht wird. Hinzu kommt, daß Pflegemittel für Schuhe in der Regel täglich, bzw. nach jedem Tragen, angewendet werden, während man Selbstglanzemulsionen für Fußböden im allgemeinen nur in Abständen von 1 bis 6 Monaten aufbringt. Diese Unterschiede zwischen Fußbodenbelägen und Leder machen leicht verständlich, daß die Anforderungen an ein Produkt für Fußböden und an ein Pflegemittel für Schuhe und Leder völlig anders sind. Die Versuche, für die Fußbodenbehandlung entwickelte Produkte auch zur Schuh- und Lederpflege einzusetzen, sind aus folgenden Gründen fehlgeschlagen:

1. Fußboden-Selbstglanzemulsionen führen auf Leder durch die unzureichende Filmelastizität und Filmknickbruchbeständigkeit zum Brechen und Ablösen des Filmes vom Schuhoberleder.
2. Fußboden-Selbstglanzemulsionen ergeben bereits nach einigen Aufträgen starke Filmbildungen, wodurch es zu Beschichtungen des Schuhoberleders, Überdeckung der natürlichen Narbenstruktur des Leders, Verkrustungen und Verlust der Atmungsaktivität des Leders kommt.
3. Durch pH-Werte von 9 und mehr bewirken für Fußböden entwickelte Selbstglanzemulsionen ein Verspröden des Leders bzw. Lederangriffs und Brüchigwerden.
4. Herkömmliche Selbstglanzemulsionen bewirken keine Lederpflege und -fettung und beeinträchtigen die Elastizität des Leders.

Derzeit werden zur Schuhpflege nahezu ausschließlich Schuhpasten (Schuhcreme) auf Basis von Wachsen und wasserunlöslichen Lösungsmitteln (z. B. Testbenzin oder Terpentin) eingesetzt, bei deren Anwendung zur Erzielung eines Glanzes nach dem Auftragen ein eigener Poliervorgang mittels Lappen oder Bürsten notwendig ist. Neben diesem Arbeitsaufwand zeigen derartige Schuhpasten auch den Nachteil der Feuergefährlichkeit bzw. die beträchtliche Neigung zum Austrocknen zufolge des Verlustes an Lösungsmittel.

Bei der Überprüfung von Produkten und Erfindungen auf dem Sektor der selbstglänzenden Fußbodenpflegemittel, z. B. gemäß DE-OS 1 769 467, FR-PS 2 332 312 und DD-PS 104 316 mußte festgestellt werden, daß derartige Produkte im Hinblick auf die eingangs erwähnten Anforderungen für die Schuh- und Lederpflege ungeeignet sind.

Es stellte sich daher die Aufgabe, ein selbstglänzendes Schuh- und Lederpflegemittel mit folgenden spezifischen, von Fußbodenpflegemitteln völlig unterschiedlichen Produkteigenschaften zu entwikkeln:

1. Bildung elastischer und verformbarer Pflegemittelfilme, die den extremen Verformungen und Knickungen während der Tragebeanspruchung widerstehen.
2. Selbstregulierende Filmbildung, d. h. bei jedem Neuauftrag des Produktes muß ein weitgehendes Egalisieren des vorhergehenden Pflegefilmes erfolgen, so daß auch nach Mehrfachaufträgen keine störende Filmaddition auftreten kann.
3. Die natürliche Narbenstruktur des Leders darf nicht beeinträchtigt werden.
4. Optimale Lederpflege durch Erhaltung von Elastizität, Biegsamkeit und Atmungsfähigkeit des Leders; pH-Wert unter 8,5.
5. Tragebeständiger, wasserfester Glanz ohne Polieren. Verlängerte Pflegeintervalle.

Das erfindungsgemäße Schuh- und Lederpflegemittel weist als wesensbestimmende Neuheit die selbstregulierende Bildung von elastischen, homogenen, knickbruchbeständigen, lederpflegenden Filmen auf. Die Neuheit basiert auf einem speziellen Wachs/Polymer-Gemisch, mit einem Anteil von 4 bis 14%, vorzugsweise 4 bis 10%, und wasserlöslichen organischen Lösungsmitteln in einer Menge von 5 bis 15%. Weitere Zusätze können sein: Emulgatoren, Verdickungsmittel, Netz- und Verlaufmittel, Entschäumer, Konservierungsmittel, Parfüm, Weichmacher, sowie lichtbeständige Farbstoffe. Der pH-Wert der Produkte liegt zwischen 7 und 8,5.

Die selbstregulierende Filmbildung beruht darauf, daß auf die Wachs/Polymer-Kombination abgestimmte wasserlösliche organische Lösungsmittel-Kombination ein gesteuertes Anlösen der Pflegefilme mit z. T. gleichzeitiger Plastifizierung erfolgt, woran sich dann die Verbindung und Egalisierung des vorherigen Pflegemittelfilmes mit dem Neuauftrag anschließt.

Es wurde überraschenderweise festgestellt, daß spezielle Polymer/Wachs-Kombinationen entscheidend für die erfindungsgemäßen Eigenschaften des Schuh- und Lederpflegemittels,

0 036 956

insbesondere für Filmelastizität, Lederpflege, Gebrauchsbeständigkeit und Filmregulierung sind.


## 1. Polymeranteile

### 1.1 Acrylate und Styrol-Acrylate

Für die erfindungsgemäßen Schuh- und Lederpflegemittel eignen sich alkaliunlösliche, nicht metallvernetzte Acrylate mit einer minimalen Filmbildungstemperatur (MFT) von unter 30°C, — diese kommen im allgemeinen in Form von 18- bis 40%igen anionischen und/oder nicht-ionogenen Emulsionen auf den Markt — sowie alkaliunlösliche, nicht metallvernetzte Styrol-Acrylate mit einer MFT zwischen 40° und 65°C — diese werden üblicherweise in Form von 40%igen anionischen Emulsionen eingesetzt —.

Metallvernetzte Acrylate und Styrol-Acrylate, wie z. B. in der DE-OS 1 769 467 angeführt, sind für die Schuh- und Lederpflege ungeeignet, da sie stark knickbruchempfindliche Filme ergeben und darüber hinaus zur Filmaddition (Beschichtung) führen. Alkalilösliche Harze, wie in FR-PS 2 332 312 und DE-OS 1 769 133 erwähnt, können für Schuh- und Lederpflegemittel nicht eingesetzt werden, da die hohe Alkalität derartiger Produkte (pH 9,6−10) zu einem Verspröden des alkaliempfindlichen Leders, Lederschädigungen und Farbtonumschlägen führt, zum anderen sind derartige Kunststoff-Filme nicht regulierbar und nicht ausreichend knickbruchbeständig. Auch Kombinationen von Maleinatharz, Methacrylat und Carnaubawachs, wie in der US-PS 2 511 695 beschrieben, ergeben nicht das für das erfindungsgemäße Prinzip der Schuh- und Lederpflegemittel wichtige Filmbildungsverhalten.

Beispiele für geeignete Acrylate und Styrol-Acrylate sind:

Nicht metallvernetzte, alkaliunlösliche Acrylate:

|  | FKG | MFT (°C) | Vis (cps) | pH |
|---|---|---|---|---|
| Fa. Polyvinyl Chemie |  |  |  |  |
| Neocryl A 45 | 37,5% | <0° | <150 | 9−10 |
| Neocryl A 45-B | 37,5% | <0° | <250 | 9−10 |
| Neocryl W-63-L | 35,0% | 30° | 5−15 | 9−10 |
| Neocryl W-63-M | 35,0% | 15° | 5−15 | 9−10 |
| Neocryl A 401 | 35,0% | 20° | 10−25 | 9−10 |
| Neocryl A-26-C | 18,0% | 16° | <10 | 8−10 |
| Neocryl A-212 | 40,0% | <0° | 10−20 | 8−9,5 |
| Neocryl A-214 | 40,0% | <0° | 5−20 | 8,5−9,5 |
| Neocryl A-33 | 40,0% | <0° | <100 | 5−7 |
| Neocryl A-82 | 40,0% | <0° | 20−100 | 2−4 |
| Neocryl Q-717 | 46,5% | <0° | 50−250 | 2−4 |
| Neocryl NL-10-D | 46,5% | 15° | 50−250 | 2−4 |
| Neocryl P-920-A | 30,0% | 0° | 250−750 | 5−6 |
| Neocryl CC-6 | 40,0% | 20° | 10−20 | 7−8,5 |
| Neocryl A-234-U | 40,0% | 29° | 10−20 | 6−8 |
| Neocryl XK-53 | 38,0% | 18° | 50−250 | 7−8 |
| Neocryl XK-54 | 30,0% | <0° | 500 | 8,5 |

3

Fortsetzung

|  | FKG | MFT (°C) | Vis (cps) | pH |
|---|---|---|---|---|
| Neocryl XK-62 | 42,0% | ±30° | <1000 | 7,5—8,5 |
| Neocryl A-601 | 32,0% | 0° | 150 | 7,5—8,0 |
| Neocryl A-604 | 32,0% | 0° | 150—300 | 7,7—8,3 |
| Neocryl A-622 | 32,0% | <0° | 100—300 | 7,8—8,5 |
| Neocryl A-1050 | 32,0% | <0° | <100 | 8,0—9,0 |
| Fa. Hoechst |  |  |  |  |
| Licomer VP A 11 | 40,0% | 10° | <100 | 7—8,5 |
| Fa. BASF |  |  |  |  |
| Poligen A | 40,0% | 15° | — | — |
| Poligen MA | 40,0% | 25° | — | 6,5—7,5 |
| Fa. Hendricks und Sommer |  |  |  |  |
| Ubatol U-3054 | 40,0% | 25° | — | 6,5—7,5 |

Nichtmetallvernetzte, alkaliunlösliche Styrol-Acrylate:

| | FKG | MFT (°C) | Vis (cps) | pH |
|---|---|---|---|---|
| **Fa. Polyvinyl Chemie** | | | | |
| Neocryl A-290 | 40,0% | 55° | 20—60 | 7,8—8,8 |
| Neocryl A-291 | 40,0% | 60° | 20—60 | 4—6 |
| Neocryl A-297 | 40,0% | 12° | 20—60 | 7,5—8,5 |
| Neocryl CC-296 | 40,0% | 45° | 20—40 | 7,5—8,5 |
| Neocryl A-247-H | 40,0% | 42° | 10—40 | 7,5—8,5 |
| Neocryl XK-56 | 35,0% | <0° | <500 | 8,5—9,5 |
| Neocryl A-621 | 40,0% | 0° | 200—600 | 8—9 |
| | | | | |
| **Fa. Ubatol (Hendricks und Sommer)** | | | | |
| Ubatol U-3400 | 40,0% | 46° | ~70 | 7,3—7,7 |
| Ubatol U-3406 | 40,0% | 56° | ~60 | 7,3—7,7 |
| Ubatol U-4005 | 40,0% | 57° | ~100 | 7,0—7,5 |
| | | | | |
| **Fa. Hoechst** | | | | |
| Licomer A 41 | 40,0% | 45° | <100 | 7,0—8,5 |
| | | | | |
| **Fa. BASF** | | | | |
| Poligen ASN | 40,0% | 50—60° | — | — |

### 1.2 Polyäthylen

Geeignet sind Polyäthylene und Polyäthylenoxidate mit einem Molekulargewicht von unter 20 000, wobei die Säurezahl unter 30 und die Verseifungszahl unter 50 liegt. Polyäthylenoxidate wie in der DE-OS 2 201 218 beschrieben, mit höheren Verseifungs- und Säurezahlen, sind für die erfindungsgemäßen Schuh- und Lederpflegemittel nicht geeignet, da sie Filme mit zu geringer Filmelastizität und starker Filmaddition ergeben.

Beispiele für geeignete Polyäthylene sind:

Polyäthylenwachse, auch oxidiert, Wachsemulsionskonzentrate:

|  | pH | FKG | MFT | Tropfpkt. od. Erstarrpkt. | MG | VZ | SZ |
|---|---|---|---|---|---|---|---|
| **Fa. Hoechst** | | | | | | | |
| Licomer-TMW 11 | 9,0 | ~35,0% | 0° | ~120° | ⌀5000 | ~45 | ~27 |
| Licomer PE 02 | 10,5/11,5 | 40,0% | 0° | — | — | — | — |
| **Fa. BASF** | | | | | | | |
| Poligen PE | — | 40,0% | 2° | — | — | — | — |
| **Fa. Ubatol** | | | | | | | |
| Ubatol FPG 947N | 9,5/10,5 | 32,0% | — | 120—150° | — | 15 | ~28 |
| **Fa. Nestler** | | | | | | | |
| Aquacer 502 | 8,5/9,5 | 35,0% | — | 138° | — | — | — |

Polyäthylenwachse, auch anoxidiert, fest:

|  | Tropfpkt. | VZ | SZ | Dichte |
|---|---|---|---|---|
| **Fa. Hoechst** | | | | |
| PE 520 | 118—123 | 0 | 0 | 0,92—0,94 |
| PE 130 | 122—127 | 0 | 0 | 0,95—0,97 |
| PE 190 | ~140 | 0 | 0 | 0,95—0,97 |
| PED 153 | ~120 | 45 | 27 | 0,98 |
| PED 521 | 105—110 | 25—40 | 15—19 | 0,95—0,97 |
| PED 522 | 100—105 | 40—60 | 23—28 | 0,95—0,97 |
| TM PED 121 | ~177 | ~30 | ~17 | 0,98 |
| **Fa. BASF** | | | | |
| OA-Wachs | 90—95° | | | |
| **Fa. Veba** | | | | ⌀ MG |
| Vestowax AS 1550 | 102—107 | 47—52 | 22—26 | ~1500 |

2. Wachse

Zur Steuerung der Filmregulierung, Glanzgebung und insbesondere der Filmelastizität und Lederpflege ist der Einbau eines speziellen Wachses bzw. einer besonderen Wachskombination erforderlich. Vorzugsweise eignen sich Montansäureester, z. B. mit Äthandiol und/oder 1,3 Butandiol, allein oder in Mischung mit Carnaubawachs, Fettsäureglyceriden, Kohlenwasserstoffen und Derivaten, sog. Lickeröle, Lanolin, Mikrowachsen oder anderen Montanwachsen.
Die in Frage kommenden Montansäureesterwachse müssen, um die erfindungsgemäßen Eigenschaften des Schuh- und Lederpflegemittels zu ergeben, Säurezahlen von unter 50, Verseifungszahlen zwischen 100 und 150, sowie einen Schmelzpunkt von unter 70°C aufweisen. Andere Montansäureesterwachse sind für das gegenständliche Schuh- und Lederpflegemittel nur in Kombination mit Montansäureesterwachsen der obigen Spezifikation geeignet.

### 3. Wasserlösliche organische Lösungsmittel

Für die erfindungsgemäßen Schuh- und Lederpflegemittel eignen sich ausschließlich wasserlösliche organische Lösungsmittel. Die in der DE-OS 1 769 467 und DE-OS 1 769 133 angeführten wasserunlöslichen Lösungsmittel ergeben keine ausreichende Filmregulierung und zufolge der erforderlichen Emulgatoren wasserempfindliche Filme. Lösungsmittelfreie Fußbodenselbstglanzemulsionen, wie z. B. in der DE-OS 1 210 114 genannt, sind wegen der starken zur Versprödung neigenden Filmaddition für Schuh- und Lederpflege nicht geeignet.

Als wasserlösliche organische Lösungsmittel kommen folgende Gruppen in Frage:

1. Aliphatische Alkohole $C_nH_{2n+1}OH$; $n = 2-5$, z. B. Äthanol.
2. Glykoläther $C_nH_{2n+1}-O-(C_nH_{2n}-O)_mH$; $n = 2-6$, $m = 1-5$, z. B. Butylenglykol, Triäthylenglykol.
3. Glykole $C_nH_{2n}(OH)_2$; $n = 2-6$, z. B. Äthylenglykol.

Um die Eignung der erfindungsgemäßen Schuh- und Lederpflegemittel zu demonstrieren, wurden diese einem Produktvergleich mit anderen Produkten unterzogen:

Produkt A (AT-PS 319 436) weist folgende Zusammensetzung auf (in %):

| | |
|---|---|
| 1,12 | Styrol-Maleinsäureanhydrid-Copolymerisat |
| 9,00 | Metallvernetztes Acrylat (MFT 65°) |
| 3,00 | Polyäthylen |
| 2,25 | Tributoxiäthylphosphat |
| 1,20 | ε-Caprolactam |
| 0,60 | Nichtionogener Emulgator |
| 1,50 | Diäthylenglykoläthyläther |
| 0,10 | Silikon-Entschäumer |
| 0,04 | Fluorcarbontensid |
| 1,50 | Ammoniak (25%ig) |
| | Festkörpergehalt: ca. 16% |

Produkt B (DD-PS 104 316) in %:

| | |
|---|---|
| 5,00 | Montansäureesterwachs |
| 12,00 | Acryl-Styrolcopolymerisat (MFT 50°C) |
| 0,36 | Emulgatorgemisch (Alkylsulfonat und Äthylenoxid-Propylenoxidaddukt) |
| 3,00 | (Polyäthylen, Säurezahl: 60) |
| | Festkörpergehalt: ca. 20% |

Produkt C (FR-PS 2 332 312) in %:

| | |
|---|---|
| 51,45 | Alkalilösliches Styrolmaleinatcopolymer (20%ig), Säurezahl von 260 bis 280 |
| 5,00 | Acrylat (35%ig) Molekulargewicht über 200 000, bestehend aus: |
| | 38,0% Methylmethacrylat |
| | 52,0% 2-Äthylhexylacrylat |
| | 9,0% Methacrylsäure |
| 2,154 | Polyäthylen (25%ig) |
| 5,00 | Äthylenglykol |
| 0,57 | Triton X 405 |
| 0,84 | Tributoxyäthylphosphat |
| 1,20 | Ammoniak |
| Rest | Wasser |
| | Festkörpergehalt: ca. 14% |
| | pH-Wert: 9,8 |

Produkt D (erfindungsgemäß) in %:

| | |
|---|---|
| 2,00 | Montansäureesterwachs (Verseifungszahl: 130, Säurezahl: 30) |
| 2,00 | Lanolin |

3,00 nicht metallvernetztes, alkaliunlösliches Acrylat (MFT 20°)
2,00 Polyäthylenoxidat (Säurezahl: 24, Verseifungszahl: 45)
0,20 Emulgator
0,20 Diäthanolamin
2,00 Äthylenglykolmonobutyläther
5,00 Äthylalkohol
pH-Wert: 8
Festkörpergehalt: ca. 9%

Produkt E (erfindungsgemäß) in %:

4,00 Montansäureesterwachs (Verseifungszahl: 130, Säurezahl: 30)
2,00 Fettsäuretriglycerid
2,00 Acrylstyrolcopolymerisat (MFT: 45°) alkaliunlöslich, nicht metallvernetzt
2,00 Polyäthylen (Säurezahl: 16, Verseifungszahl: 30)
0,30 Emulgator
0,30 Diäthanolamin
3,00 Äthylenglykol
8,00 Isopropylalkohol
pH-Wert: 8
Festkörpergehalt: ca. 10%

Die Wirkung des erfindungsgemäßen Schuhpflegemittels mit regulierter Filmbildung geht aus der nachfolgenden Gegenüberstellung hervor, wobei die Rezepturen B und E geprüft wurden. Die Prüfung erfolgte in der Form, daß jeweils auf 100 cm² Linoleum und PVC mittels eines Kunststoffschwammdispensers die Produkte bei Raumtemperatur aufgetragen wurden und dann nach Trocknung bei 40° die Rückstandsmenge (= Film) durch Wägung ermittelt wurde. Die angegebenen Werte sind Werte von Doppelbestimmungen:

| | Linoleum | | PVC | |
|---|---|---|---|---|
| | Rez. B | Rez. E | Rez. B | Rez. E |
| | in g | in g | in g | in g |
| 1. Auftrag | 0,02 | 0,01 | 0,01 | 0,01 |
| 2. Auftrag | 0,04 | 0,02 | 0,03 | 0,02 |
| 3. Auftrag | 0,06 | 0,02 | 0,05 | 0,03 |
| 4. Auftrag | 0,09 | 0,03 | 0,08 | 0,04 |
| 5. Auftrag | 0,12 | 0,03 | 0,11 | 0,05 |
| 6. Auftrag | 0,15 | 0,05 | 0,13 | 0,06 |
| 7. Auftrag | 0,17 | 0,05 | 0,15 | 0,07 |
| 8. Auftrag | 0,20 | 0,06 | 0,19 | 0,08 |
| 9. Auftrag | 0,22 | 0,08 | 0,22 | 0,09 |
| 10. Auftrag | 0,24 | 0,08 | 0,25 | 0,10 |

Die Filmaddition des erfindungsgemäßen Produktes ist also um etwa ⅔ geringer.

Die Tabelle zeigt eine Gegenüberstellung der Eigenschaften der erfindungsgemäßen Schuhpflegemittel (D und E) mit 4 anderen Produkten.

+++ sehr gut
++ gut
+ mäßig
— schlecht (mangelhaft)
—— sehr schlecht

| | Prod. A (ÖP 319 436) | Prod. B (DD-PS 104 316) | Prod. C (FR-PS 2 332 312) | D (erfind.gemäß) | E |
|---|---|---|---|---|---|
| Selbstglanz | +++ | ++ (+) | +++ | ++ (+) | ++ (+) |
| Regulierte Filmbildung nach | | | | | |
| 10 Aufträgen | + | + | + | +++ | +++ |
| 20 Aufträgen | — | — | — | +++ | +++ |
| 50 Aufträgen | —— | —— | —— | +++ | +++ |
| Knickbruchbeständigkeit n. 10 | | | | | |
| Aufträgen | ++ | + | + | +++ | +++ |
| Wasserbeständigkeit | ++ | ++ | ++ | ++ | ++ |
| Filmelastizität | + | + | + | +++ | +++ |
| Abriebfestigkeit | + | + | + | + | + |
| Reinigungswirkung | + | + | + | ++ | +++ |

**Patentansprüche**

1. Flüssiges Schuh- und Lederpflegemittel mit selbstregulierender Filmbildung, hoher Knickbruchfestigkeit, Verformbarkeit und lederpflegender Wirkung, auf Bais einer Wachs/Polymerkombination, dadurch gekennzeichnet, daß es als Wachskomponente Montansäureesterwachse mit einer Säurezahl von unter 50, einer Verseifungszahl von 100 bis 150 und einem Schmelzpunkt über 70°C, gegebenenfalls in Mischung mit Carnaubawachs, Fettsäureglyceriden, Lanolin, Kohlenwasserstoffen und Derivaten, sog. Lickerölen, Mikrowachsen oder anderen Montansäurewachsen und als Polymerkomponente Polyäthylen, bzw. Polyäthylenoxidate mit einem Molekulargewicht von unter 20 000, einer Säurezahl von unter 30 und einer Verseifungszahl von unter 50 und nicht metallvernetzte, nicht alkalilösliche Acrylate mit einer minimalen Filmbildungstemperatur (MFT) von unter 30° und/oder nicht metallvernetzte, alkaliunlösliche Styrol-Acrylate mit einer MFT von 40 bis 65°C und 5−15% wasserlösliche organische Lösungsmittel enthält, wobei der pH-Wert zwischen 7 und 8,5 und der Wachs/Polymer-Anteil, bezogen auf das Gesamtprodukt zwischen 4 und 14%, vorzugsweise 4−10%, liegt.

2. Flüssiges Schuhpflegemittel nach Anspruch 1, dadurch gekennzeichnet, daß es 5 bis 15% organische, wasserlösliche Lösungsmittel vom Typ aliphatische Alkohole $C_nH_{2n+1}OH$, $(n=2−5)$, oder Glykoläther $C_nH_{2n+1}−O−(C_nH_{2n}−O)_mH$ $(n=2−6$, $m=1−5)$, oder Glykole $C_nH_{2n}(OH)_2$ $(n=2−6)$ enthält.

3. Flüssiges Schuh- und Lederpflegemittel nach den Ansprüchen 1 und 2, dadurch gekennzeichnet, daß es Emulgatoren, Verdickungsmittel, Verlauf- und Konservierungsmittel, Entschäumer, Weichmacher, lichtechte Farbstoffe und Parfüms enthält.

**Claims**

1. A liquid shoe-care and leather-care preparation with self-regulating film formation, high flex cracking resistance, deformability ans a leather-preserving effect, being based on a wax/polymer combination, characterised in that it contains as wax component montanic acid ester waxes having an acid number below 50, a saponification number of from 100 to 150 and a melting point above 70°C, optionally in combination with carnauba wax, fatty acid glycerides, lanolin, hydrocarbons and derivates, so-called leather oils, microwaxes and other montanic acid waxes and, as polymer component, polyethylene or polyethylene oxidates having a molecular weight below 20,000, an acid number below 30 and a saponification number below 50 and non-metal-crosslinked, alkali-insoluble acrylates having a minimum film-forming temperature (MFT) below 30° and/or non-metal-crosslinked, alkali-insoluble styrene acrylates having an MFT of from 40 to 65° C and from 5 to 15% of water-soluble organic solvents, the pH-value being between 7 and 8.5 and the wax-polymer content, based on the preparation as a whole, amounting to between 4 and 14% and preferably to between 4 and 10%.

2. A liquid shoe-care preparatio.. as claimed in Claim 1, characterised in that it contains from 5 to 15% of organic water-soluble solvents of the aliphatic alcohol $C_nH_{2n+1}OH$ (n = 2 − 5) type, the glycol ether $C_nH_{2n+1} − O(C_nH_{2n} − O)_mH$ (n = 2 − 6, m = 1 − 5) type or glycol $C_nH_{2n}(OH)_2$ (n = 2 − 6) type.

3. A liquid shoe-care and leather-care preparation as claimed in Claims 1 and 2, characterised in that it contains emulsifiers, thickeners, levelling agents and preservatives, anti-foam agents, plasticisers, light-fast dyes and perfumes.

## Revendications

1. Produit liquide d'entretien du cuir et des chaussures, ce produit assurant une formation auto-réglée de pellicules, tandis qu'il possède une haute résistance à la rupture par flexion, une aptitude à la déformation et un effet d'entretien du cuir, ce produit étant à base d'une combinaison de cire/polymère, caractérisé en ce que, comme composant de cire, il contient de la cire d'ester d'acide montanique d'un indice d'acide inférieur à 50, d'un indice de saponification de 100 à 150 et d'un point de fusion supérieur à 70°C, éventuellement en mélange avec de la cire de Carnauba, des glycérides d'acides gras, de la lanoline, des hydrocarbures et leurs dérivés, des huiles dites de liqueurs grasses, des micro-cires ou d'autres cires d'acide montanique et, comme composant polymère, il contient du polyéthylène ou des produits d'oxydation de polyéthylène d'un poids moléculaire inférieur à 20.000, d'un indice d'acide inférieur à 30 et d'un indice de saponification inférieur à 50, de même que des acrylates insolubles dans les alcalis et non réticulés à des métaux ayant une température minimale de formation de pellicules inférieure à 30° et/ou des styrène/acrylates insolubles dans les alcalis et non réticulés à des métaux ayant une température minimale de formation de pellicules de 40 à 65°C, et 5 − 15% de solvants organiques hydrosolubles, le pH se situant entre 7 et 8,5, tandis que la quantité de cire/polymère se situe entre 4 et 14%, de préférence, entre 4 et 10%, calculé sur la totalité du produit.

2. Produit liquide d'entretien pour chaussures suivant la revendication 1, caractérisé en ce qu'il contient 5 à 15% de solvants organiques hydrosolubles du type des alcools aliphatiques $C_nH_{2n+1}OH$, (n = 2 − 5) ou des glycoléthers $C_nH_{2n+1} − O(C_nH_{2n} − O)_mH$, (n = 2 − 6, m = 1 − 5) ou des glycols $C_nH_{2n}(OH)_2$ (n = 2 − 6).

3. Produit liquide d'entretien pour le cuir et les chaussures suivant les revendications 1 et 2, caractérisé en ce qu'il contient des émulsionnants, des agents épaississants, des agents fluidifiants, des agents de conservation, des inhibiteurs de mousse, des plastifiants, des colorants solides à la lumière et des parfums.